# EUROPEAN PATENT SPECIFICATION

(11) **EP 3 334 275 B1**
(45) Date of publication and mention of the grant of the patent: **28.09.2022**
(21) Application number: 16770792.6
(22) Date of filing: 03.08.2016
(51) Int. Cl.: A01N 1/02

(54) **DEVICE FOR TRANSPORT OF BIOLOGICAL SAMPLES AND MONITORING METHOD THEREOF**
VORRICHTUNG ZUM TRANSPORT VON BIOLOGISCHEN PROBEN UND ÜBERWACHUNGSVERFAHREN DAFÜR
DISPOSITIF POUR LE TRANSPORT D'ÉCHANTILLONS BIOLOGIQUES ET SON PROCÉDÉ DE SURVEILLANCE

(30) Priority: 10.08.2015 IT UB20153042
(43) Date of publication of application: 20.06.2018
(73) Proprietor: Lavorarea Soc.Coop.Sociale, 29022 Bobbio (PC) (IT)
(72) Inventor: FRASSINELLI, Michele, 29022 Bobbio (PC) (IT)
(74) Representative: Riccardi, Sergio
(86) International application number: PCT/IB2016/001097
(87) International publication number: WO 2017/025789

(56) References cited:
- EP-A1- 2 668 847
- WO-A1-2015/042841
- WO-A2-02/26034
- US-A1- 2013 106 607
- US-A1- 2015 017 627
- US-B1- 6 354 104
- US-B1- 8 539 790

## Description

### Field of the invention

The present invention relates to the field of transport and preservation of fluids, materials and biological tissue.

### Background

As it is known, both preservation and transport of biological material mostly concerning health field or the like, comprises a series of complicated procedures to comply with and it is strictly controlled by legal and health regulations. That appears obviously logical and strictly recommended because it deals in general with transport of blood or hemo components or biological material and/or biological sample and/or organs. In particular, what is interesting for the present invention, is that said material transport from one facility to another, in particular from the taking spots such as hospitals, clinics, laboratories and others similar locations (for instance biochemical analysis laboratories, laboratories for transfusion operations, ambulances and medical cars).

Nowadays it is known to the operators that the transport of said materials done by an operator, although it is an operation subject to many rules, as hereinbefore said, is carried out through simple thermal or cooled sealed containers or provided with ice bars or conventional small commercial refrigerators, but not specific ones. It appears immediately obvious that for both cases extraordinary problems occur; for sealed containers it is difficult to set a desired temperature, both hot and cold, and above all to keep it constant, for small commercial refrigerators instead the transport is easier and more reliable, and temperature should be regulated. But it is known that commercial refrigerators are characterized by a very approximate temperature regulation, and they usually do not give information when the temperature is affected by a variation respect to the one set, unless important thermal shocks. Anyhow information concerning the temperature inside the refrigerator are not given, there is not any monitoring of its openings that could cause the contained biological material or organ to be affected by thermal shocks.

Furthermore said devices are very heavy, often they require to be non-stop powered (even if there are models provided with batteries that are less reliable and heavier). In more advanced commercial refrigerators the temperature is recorded usually by devices for saving data, which adversely record only the refrigerator temperature and not other data such that inserting or removing materials, device position, etc.

It appears obvious that transport of perishable biological materials, transport of samples or infectious substance or potentially infectious, are justified grounds of problems for all stakeholders, for instance researchers, laboratory personnel, transport service personnel, biological material receiving personnel, users, nurses, surgeons, etc.

It is obvious that specifications, rules, strict standards and further procedures are adopted for said material and substance transport, suitable for guaranteeing safety of personnel involved in transport and shipment operations, supervising the device for preventing dispersion of infectious agents or potentially infectious for environment and persons, ensuring material reaches its destination in time and in excellent conditions in order to be analyzed, or used or sorted, in conditions of maximum security, better ensuring the shipment/transport/delivery and use chain, anyway to not deteriorate materials which are very important for man's health.

It was seldom noticed cases of infectious diseases spread by transport, however very often transported materials result to be deteriorated by their transport. The WHO is one of the institutes that established very strict rules and specifications to be followed, which involve the use of exact protocols, and accurate preservation and monitoring conditions. Furthermore there are several procedures about transport labelling, packaging, monitoring, documentation arranging, all stages that shall give suitable warranties. For instance there are packaging procedures comprising use of a primary container, a secondary container, and an outer container to guarantee the material sterility and the right temperature preservation (for instance transport of hemo material, medicines, samples to be analyzed, organs).

However it appears surprising that such lack of technologically transport equipment, causes many of these protocols strictly controlled by regulations to provide for cases wherein is involved the transport with ice, the total lack of monitoring of the actual transport time, outer temperature during transport, other environmental variables, etc.

As hereinbefore said, prior art discloses technical solutions which however do not provide for the innovative features of the present invention.

Document WO 02/26034 A2 actually discloses a complex apparatus for maintaining organ vitality during their transport.

Document US 6354104 B1 discloses a lockable and portable specimen transporter having a thermostatically controlled cooling unit to maintain the specimens at a fixed temperature. The interior of a chassis is subdivided into sample wells to provide separate storage areas for different types of specimens.

Document WO 2015/042841 B1 discloses a portable system adapted to provide an indication of a current temperature of contents contained within an enclosed volume defined by a closable container. The system comprises a temperature measuring apparatus and a control device.

Document EP 2668847 A1 discloses an attaché case for carrying biological samples, comprising a location detection device and an inertial sensor for the position of the case, and a control unit comprising a communications device.

Document US 2013/0106607 A1 discloses a portable carrier device supporting product tracking and monitoring of regulated products.

Finally also document US 8539790 B1 discloses a device for climate-controlled and secure transport, which in one embodiment comprises multiple closable compartments that may each be individually temperature-controlled. In another embodiment an electronic lock system is provided.

It is an object of the present invention to disclose a device for transport biological materials or the like, which is provided with an inner accurate monitoring of the temperature in real time.

A further object of the present invention is to provide for a transport device which is versatile, reliable, and efficient for maintaining material cooling and heating temperatures.

A further object of the present invention is to describe a device suitable for regulating the temperature adjustment according to the device outer temperature as

It is a purpose of the present invention to provide for a device allowing the real time monitoring of the device position, and the device tracking.

A further object of the present invention is to provide for a device also allowing to control and regulate the device openings, duration of such openings and any material removal and insertion.

Another object of the present invention is to disclose a device which is secure in particular from an anti-tampering point of view.

Finally another object of the present invention is to disclose a smart device, which is able to interact in real time with the surrounding environment and can be controlled in real time.

A further object of the present invention is to disclose a device, which is simple, compact and easy to be transported and dragged, even by a single operator and versatile to organize its inner room, to insert any samples of biological material, and at the same time easy to be cleaned and maintained, and meets any WHO, national, regional and similar regulations.

### Summary

These and other purposes will be achieved by the transport device according to claim 1. Said device comprises a handle and a couple of wheels, a refrigerating and/or heating body provided with real time temperature monitoring and regulation, radiofrequency reading sensors for material insertion and removal, monitoring for a continuous control of transported materials, a device lid opening controlled so as to be locked at a predetermined time, and/or opened only by authorized personnel, provided for instance with a special code or key or card or any other opening device control suitable for this purpose, the whole being enclosed in a compact body, characterized by its dimensions, volume and weight consistent with a single operator handling, made easier by an telescopic handle like a trolley case and by at least a couple of wheels for its movement.

Moreover said transport device comprises battery charge detectors and temperature control detectors, preferably at least two, for being always able to adjust the temperature according to the environment conditions.

Said device furthermore may be provided with GPS control and monitoring sensors allowing a real time device tracking.

The device further comprises a monitoring system to allow real time displaying temperature data, temperature variation data, opening alarm, position, etc, besides additional signals which can be configured according to user requirements and customized through device implementation with a control method with changeable variables.

Said device shall be monitored and controlled, in a particular advantageous way, by a method suitable designed for monitoring innovative parameters implemented in said device, since never before such a transport and temperature control device was achieved suitable for biological materials, samples, fluids, provided with safety systems for transport, transporter, said device complying with safety and health regulations, to guarantee the best possible management and control of transported materials and accurate step by step monitoring of important biological and similar substances.

Let us think for instance to an unforeseen circumstance during the transport which causes its protraction, with consequent possible deteriorations in turn caused by unexpected temperature variations, or accidental or voluntary tampering as well, or accidents, or necessity of temperature dynamic adjustment according to a contents better management.

### Brief description of the drawings

These and other objects attained by the innovative and versatile device for transport of biological samples will be analysed in great detail hereinafter, by the description of some preferred embodiments of the device according to the present invention and of a following method for monitoring and controlling said device, and illustrated in the accompanying drawings, in which:
fig. 1 is a front view of a preferred embodiment of the transport device for biological samples according to the present invention;
fig. 2 is a lateral/rear view of the preferred embodiment shown in fig. 1 of the transport device for biological samples according to the present invention and
fig. 3 is an exploded view of said embodiment .

### Detailed description

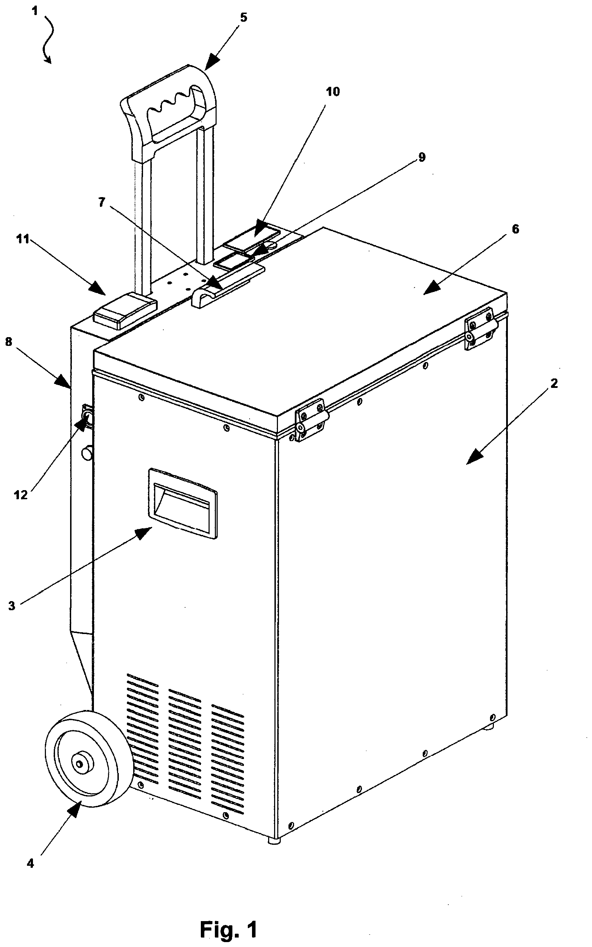

In particular with reference to figure 1, a device for biological sample transport by an operator is shown in an embodiment according to the present invention. In particular said device 1 is an integrated system, which allows to add many other functions to add to a particularly reliable transport. In in the embodiment shown in figure 1 an insulated container 2 is provided for containing biological materials provided with comfortable lateral handles 3, for allowing the device lifting for its transport, rotating elements 4, for instance one or more wheels arranged on the device base and a handle 5 for instance a telescopic handle, suitable for a convenient and easy transport of a heavy device as well, and again a lid 6 for said device, which is configured for a controlled opening and it is also insulated, in another advantageous embodiment (provided with a comfortable handle 7). In addition in a particular advantageous way said device comprises a rear container structure 8 wherein the handle 5 for instance a telescopic handle is inserted, which comprises electric and electronic components of the device (which will be described hereinafter). On said rear container structure 8 control detectors and any data transmission of said innovative device 1 are arranged, such as at least an indicator of charge of the battery power supply 9, an interface 10 for instance an inner temperature control display of said insulated container 2, which will be connected to one or more temperature monitoring sensors of the system with 0.1 °C variation detected control step, a radiofrequency reader 11 for real time monitoring of inserting materials and for monitoring lid opening and closing (operation which is done according to the dedicated method hereinafter described). In the present embodiment connections 12 for charge supplying/power operation of the device, arranged on the rear container structure 8, are illustrated.

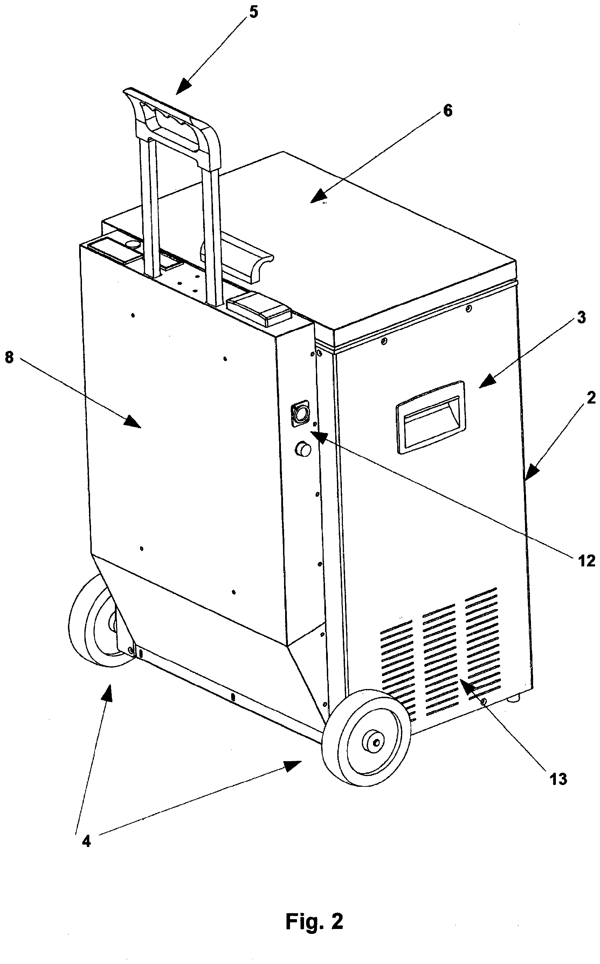

Figure 2 is a rear view of the same embodiment of the device illustrated in fig. 1, showing further technical details, in particular with reference to the container 8 for the electric and electronic part comprising also said connections 12 for charging the device battery and/or elements for connecting directly the device to the power grid as necessary, said electronic part including therefore also a battery for journeys without power supply connection.

Furthermore, in case of unexpected events (no possibility to charge the battery and no power supply connection), it is possible to connect to said device as well an auxiliary battery, not illustrated in the figures.

Said device 1 may comprise, arranged anyhow, for instance said control sensors of the inner container temperature being positioned in the storage cell of the insulated container 2, with a role of cooling and heating adjustment, malfunction alarm sensors, temperature alarm sensors, closed lid sensors and lock opening sensors, lid closing system electrically controlled or differently controlled, a reading system for enabling opening of the container lid (for instance a R-feed reader suitable for being activated by a card, a tag, or by any other element suitable for that purpose with a dedicated controlled code). Said device 1 may further comprise buttons or transport certified delivery detectors, (for instance through r-feed or tag recognition), alarm control lighting and/or acoustic indicators, an interface 10 for setting temperature, with possible remote setting, and with an integrated GPS system.

It has to be noted that laterally the insulated container 2 may be provided with a dispersion hot/cold grid 13 for heating/cooling bodies respectively.

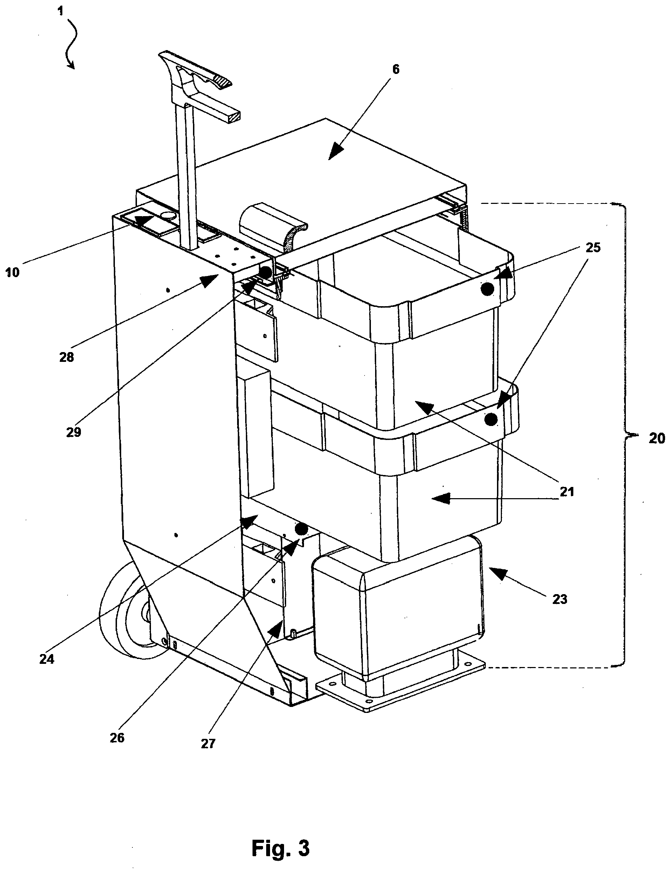

In figure 3 an exploded view of an example of a storage cell 20 comprised in the insulated container 2 is shown. Said storage cell 20 is split, as here described, into one or more containers 21, usually top opened, said containers 21 being insulated with a insulation layer suitable for this purpose, and furthermore containers 21 are closed by an upper lid 6, in turn insulated, being provided with a interposed seal between the lid and the upper edge of the lid 21. Said lids 21, for instance, may be sterilisable through known and certified methods, and may be cooled by a thermic machine 23, 24 configured for increasing and/or reducing the inner temperature of storage cell 20 and of containers 21, wherein said thermic machine 23, 24 may consist of a single cooling and heating machine and furthermore may consist of a cooling unit 23 controlling a gas refrigeration cycle, through a compressor, or a cooling electric fan radiator, or one or more gas evaporators arranged in contact with inner parts of the storage cell 20, said thermic machine 23, 24 in addition to a heating unit 24. As above mentioned said containers 21 and storage cell 20 may be heated by a heating unit 24 e.g. comprising one or more electric resistors, e.g. on/off controlled by the thermal sensors probes and a dedicated control system. In accordance with the invention said thermic machine comprises a cooling unit in the form of gas evaporators and a heating unit in the form of electric resistors.

Inside said storage cell 20 feelers or sensors 25, 26 are arranged for controlling temperature with for example heating and cooling control functions; in accordance with the invention and as here described, sensors 25 are arranged each on one container 21, said sensors 25 for example may transmit temperature data to a control external unit through wi-fi or gps transmissions, or a radio transmission methods suitable for this purpose, while one or more sensors 26 are arranged inside the storage cell 20 for its inner temperature control, for example for implementing a double temperature control of the thermic machine 23, 24, or of heating unit 24 and/or cooling unit 23, in order to substantially control every zone of the container, for maintaining temperature inside the container as much constant as possible.

In the exploded view of figure 3 there is also seena battery 27 for power supply of the device 1, which, as said hereinbefore, can be rechargeable, replaceable, additionable with another support battery etc.

Again in the here described embodiment the container 8 for electric and electronic parts comprises said interface 10 for displaying and setting the desired temperature parameters. In accordance with the invention said device further comprises in an advantageous way a lock 28, for example an electric lock, for controlling the opening/closure of the insulated container 2 of the device 1. Said lock 28, may be programmed in order to be opened only through dedicated magnetic cards or similar, or through any device which allows to set openings of the lid 6 of the device 1, and allows openings by only authorized personnel and/or in predetermined scheduled times or moments or positions authorized in the same way. Said device 1 comprises also a door opening sensor 29 which gives door opening/closure signal, acting either in cooperation with the lock 28 or in autonomous way, in order to counting opening time and non authorized openings.

The device 1 may further comprise a plurality of control and monitoring sensors suitable for the object of the present invention. In cooperation with the transport monitoring method for said device, said device 1 will allow to be customized according to final user requirements and the requested transport mode.

An implemented version of the method according to the present invention comprises one or more and preferably all of the following steps:
- The temperature control of the container (2) of the cooling/heating part, the control of one or more sensors (25,26) and their monitoring and regulation also in remote control;
- The control of the transport journey - length and time - outside temperature - real-time position monitoring (justified and unjustified stops, etc.);
- Monitoring of voltage and charge of the battery power supply;
- The control of the opening / closing operation of the lid (6);
- The setting of the opening/closing permission by a coded card (electronic, magnetic coded, numeric keypads etc.);
- Inhibition of permission and timing for opening the device (1);
- Alarm for tampering attempts - general management of the control system and signalizing anomalies in real time;
- Supervision of the integrated control system alarms and customizable management;
- Alarms via SMS, sound alarm, to the social structures, via phone or e-mail etc.
- Remote alarm of charge/discharge of the battery in advance of a preset time;
- Monitoring of extracted or inserted material by tags or the like;
- Sending of monitoring statistics and remote control via GPS system or suitable system;
- Data storage for further checks.

Said method for controlling the device 1 for transport of biological samples by an operator, may be carried out through any remote control device suitable for this purpose.

It is clearly apparent that these and further advantages described and obtained through the here disclosed device for biological materials transport and its monitoring method are to be considered subject to different embodiments according to user's requirements, and further arrangements, which may comprise the being constituted by a display possibly a touch screen, transport container of different shape, larger or smaller, modified inner room organization, different integrated monitoring sensors, alarms, and concerning features of the control and monitoring method, may be changed while still falling within the scope of the invention as defined in the claims. It is to be understood that the here disclosed embodiments and the relevant method are mere examples . The scope of the invention is defined in the appended claims.

## Claims

1. A device (1) for the manual transport of biological samples by an operator, comprising an insulated container (2) equipped with at least one handle (3, 5) for the handling and transport of the device (1), wherein the insulated container (2) comprises a storage cell (20), the storage cell being split into containers (21) that are insulated and configured for containing the biological samples,
a lid (6) for said insulated container (2),
at least one battery (27) for the autonomous transport,
a thermic machine configured for cooling and heating the inner temperature of the storage cell (20), and
wheels (4) arranged on the device base for easy transport and drag of the device (1),
wherein the device further comprises temperature sensors (26) arranged inside each of said containers (21) and further temperature sensors (25) arranged each on the outside of one of said containers (21) for measuring the inner temperature of the storage cell (20) of said insulated container (2) and configured for the regulation of the thermic machine (23, 24) , and for monitoring the inner temperature with function of control of the heating and/or cooling in at least one or more areas of the storage cell (20) of said insulated container (2),
wherein said thermic machine (23, 24) comprises a cooling unit (23) in the form of gas evaporators and a heating unit (24) in the form of electric resistors; wherein the handle (5) is a telescopic handle and wherein said lid (6) of said insulated container (2) comprises a lock (28) for controlling the closing and opening of the insulated container (2) of the device (1), said lock (28) being programmable for the opening at certain authorized times or moments or positions and comprising a reading system for enabling opening of the lid (6).

2. The device (1) according to claim 1, wherein said device (1) comprises GPS or Wi-Fi control for the traceability and changing of settings of the device (1) in real time.

3. The device (1) according to the preceding claims, comprising at least an interface on said device (1) for the external display of the monitored data and for the adjustment of said data.

4. The device (1) according to the preceding claims, wherein said device (1) comprises a radio frequency reader (11) for the monitoring in real time of the introduction of materials in said device (1) and monitoring the opening and closing operations of the lid (6).

5. A method for the control of the device (1) according to claims 1 to 4, which comprises one or more and preferably all of the following steps:
• The temperature control of the thermic machine by the temperature sensors (25,26) and their monitoring and regulation also in remote control;
• The control of the transport journey including ength and time, outside temperature, and real-time position monitoring, such as justified and unjustified stops;
• Monitoring of voltage and charge of the battery power supply;
• The control of the opening / closing operation of the lid (6);
• The setting of the opening/closing permission by a coded electronic card, a coded magnetic card, or numeric keypads ;
• Inhibition of permission and timing for opening the device (1);
• Alarm for tampering attempts and - general management of the control system and signalizing anomalies in real time;
• Supervision of the integrated control system alarms and customizable management;
• Alarms via SMS, sound alarm, to the social structures, via phone or e-mail ;
• Remote alarm of charge/discharge of the battery in advance of a preset time;
• Monitoring of extracted or inserted material by tags or the like;
• Sending of monitoring statistics and remote control via GPS system or another suitable system;
• Data storage for further checks.

6. The method for the control of the device (1) according to claim 5, being implemented by a remote control device suitable for the purpose.

## Patentansprüche

1. Vorrichtung (1) zum Handtransport von biologischen Proben durch einen Bediener, enthaltend:
- einen Isolierbehälter (2) mindestens mit einem Griff (3, 5) für die Behandlung und den Transport der Vorrichtung (1), worin der Isolierbehälter (2) eine Lagerungszelle (20) aufweist und diese Lagerungszelle (20) durch Einzelbehälter (21) unterteilt ist, und diese Einzelbehälter (21) isoliert und konfiguriert sind, um die biologischen Proben zu enthalten;
- einen Deckel (6) für den besagten Isolierbehälter (2);
- mindestens eine Batterie (27) für den selbstständigen Transport;
- eine Wärmemaschine so konfiguriert, dass sie die Innentemperatur der Lagerungszelle (20) steigert bzw. senkt; und
- Räder (4) am Fusssockel der Vorrichtung, für einen leichten Transport bzw. Mitnahme der Vorrichtung (1);
- worin die Vorrichtung weiter enthält: Temperaturfühler (26), die innerhalb jeglichen Einzelbehälter (21), sowie weitere Temperaturfühler (25), die ausserhalb jeglichen Einzelbehälter (21) angeordnet sind, um die Innentemperatur der Lagerungszelle (20) des Isolierbehälters (2) zu messen und konfiguriert für die Regelung der Wärmemaschine (23. 24) und die Innentemperatur zu überwachen, mit der Steuerfunktion der Erwärmung und/oder Kühlung am mindestens einem oder mehreren Gebieten der Lagerungszelle (20) des Isolierbehälters (2);
- worin die besagte Wärmemaschine (23, 24) eine Kühlungsbaugruppe (23) als Gasverdampfer und eine Erwärmungsbaugruppe (24) als elektrische Widerstandelemente aufweist;
- worin der Griff (5) ein ausziehbarer Griff ist, und der Deckel (6) des Isolierbehälters (2) ein Schloss (28) aufweist, um Schliessen bzw. Öffnen des Isolierbehälters (2) der Vorrichtung (1) zu steuern, und das Schloss (28) programmierbar ist, um das Öffnen nur an freigegebenen Zeiten, Momenten bzw. Stellungen zu gestatten, und ein Ablesesystem hat, um das Öffnen des Deckels (6) zu gestatten.

2. Vorrichtung (1) nach Anspruch 1, worin die Vorrichtung (1) eine GPS oder WiFi Steuerung aufweist, für die Rückverfolgbarkeit und Veränderung der Einstellungen der Vorrichtung (1) in Echtzeit.

3. Vorrichtung (1) nach den vorangehenden Ansprüchen, enthaltend mindestens eine Schnittstelle auf der besagten Vorrichtung (1), um die Bildschirmdarstellung der überwachten Daten und die Justierung der Daten zu erhalten.

4. Vorrichtung (1) nach den vorangehenden Ansprüchen, worin die besagte Vorrichtung (1) einen Radiofrequenzleser (11) für die Überwachung in Echtzeit der Einführung von Stoffen in die Vorrichtung, sowie der Öffnung bzw. Schliessung des Deckels (6) aufweist.

5. Überwachungsverfahren für die Vorrichtung nach den Ansprüchen 1-4, enthaltend eine oder mehrere und vorzugsweise alle die folgenden Stufen:
- Überwachung der Temperatur der Wärmemaschine durch Temperaturfühler (25, 26) und ihre Überwachung und Regulierung auch entfernt;
- Überwachung des Transportwegs einschliesslich Länge und Zeit, Aussentemperatur, Überwachung der Lage in Echtzeit, wie gerechtfertigte und ungerechtfertigte Anhalten;
- Überwachung der Spannung und Ladung der Versorgungsbatterie;
- Überwachung der Öffnen / Schliessen des Deckels (6);
- die Regulierung der Öffnen-/Schliessen-Genehmigung mittels einer Magnetkarte, Elektronkarte oder Ziffertastenblock;
- Sperrung der Genehmigung und der Zeitgebung für die Öffnung der Vorrichtung;
- Alarm wegen der Beschadigungsversuche und gesamte Behandlung des Überwachungsystems und der Störungsmeldung in Echtzeit;
- Überwachung der integrierten Anordnung und ihre kundenspezifische Behandlung;
- Alarm mittels SMS, Tonalarms, Sozialgefüges durch Fernruf oder E-Mail;
- Entferntes Alarm von Beladung / Entladung der Batterie vor einer voreingestellten Zeit;
- Überwachung des gezogenen oder eingesetzten Produkts mit Etiketten und dergleichen;
- Zusendung von Überwachungstatistiken und entfernter Überwachung durch GPS oder geeignetes System;
- Datenarchivierung für darauffolgende Überprüfungen.

6. Überwachungsverfahren für die Vorrichtung (1) nach Anspruch 5, durchgeführtes durch eine entfernte zweckmässige Vorrichtung.

## Revendications

1. Dispositif (1) pour le transport manuel d'échantillons biologiques par un opérateur, comprenant :
- un conteneur isolé (2) muni au moins d'une poignée (3, 5) pour la manutention et le transport du dispositif (1), dont le conteneur isolé (2) comprend une cellule de stockage (20) subdivisée en conteneurs isolés (21) et configurés pour contenir les échantillons biologiques ;
- un couvercle (6) pour ledit conteneur isolé (2) ;
- au moins une batterie (27) pour le transport autonome ;
- une machine thermique configurée pour refroidir et échauffer la température intérieure de la cellule de stockage (20), et
- roues (4) disposées à la base du dispositif, pour un transport et entrainement facilités du dispositif (1) ;
- dont le dispositif comprend aussi capteurs de température (26) disposés à l'intérieur de chaque conteneur (21) et autres capteurs de température (26) disposés à l'extérieur de chaque conteneur (21) pour mesurer la température intérieure de la cellule de stockage (20) du conteneur isolé, et configurés pour la régulation de la machine thermique (23, 24) et pour le monitorage de la température intérieure avec la fonction du contrôle de réchauffement et/ou du refroidissement dans au moins une ou plusieurs aires de la cellule de stockage (20) du dit conteneur isolé (2) ;
- dont ladite machine thermique (23, 24) comprend une unité de refroidissement (23) sous la forme de évaporateurs de gaz, ainsi que une unité d'échauffement (24) sous la forme de résistances électriques ;
- dont la poignée (5) est une poignée télescopique, et ledit couvercle (6) du conteneur isolé (2) comprend une serrure (28) pour contrôler fermeture et ouverture du conteneur isolé (2) du dispositif (1), ladite serrure (28) étant programmable pour son ouverture aux temps, moments ou positions autorisés, et comprenant un système de lecture pour valider l'ouverture du couvercle (6).

2. Dispositif (1) selon la revendication 1, dont ledit dispositif (1) comprend un contrôle GPS ou WiFi pour permettre la traçabilité et la modification en temps réel des paramètres du dispositif (1).

3. Dispositif (1) selon les revendications précédentes, comprenant au moins une interface pour ledit dispositif, pour l'affichage extérieur des données contrôlées et le réglage des données susdites.

4. Dispositif (1) selon les revendications précédentes, dont ledit dispositif (1) comprend un lecteur (11) à radiofréquence pour contrôler en temps réel l'introduction des matériaux dans ledit dispositif (1), et contrôler les opérations d'ouverture et fermeture du couvercle (6).

5. Procédé de surveillance du dispositif (1) selon les revendications 1 - 4, comprenant une ou plusieurs et de préférence toutes les étapes suivantes :
- contrôle de la température de la machine thermique par capteurs de température (25, 26) et leur affichage et réglage même par contrôle à distance ;
- contrôle des parcours de transport, comprenant longueur et temps, température extérieure et position en temps réel comme arrêts prévus et imprévus ;
- contrôle de tension et charge d'alimentation de la batterie ;
- contrôle d'ouverture et clôture du couvercle (6) ;
- réglage de l'autorisation d'ouverture et clôture par carte électronique codée, carte magnétique codée ou pavé numérique ;
- inhibition de permission et temporisation de l'ouverture du dispositif (1) ;
- alarme antieffraction et gestion générale du système de contrôle et signalisation d'erreur en temps réel ;
- supervision du système de contrôle intégré et gestion customisée ;
- alarmes moyennant SMS, sonique, aux structures sociales par téléphone ou e-mail ;
- alarme à distance de charge / décharge de la batterie, avancé par un temps fixé ;
- contrôle du matériel inséré ou extrait pat étiquette ou semblables ;
- envoi de statistiques et contrôle à distance par GPS ou autre système convenable ;
- stockage des données pour des contrôles ultérieurs.

6. Procédé de surveillance du dispositif (1) selon la revendication 5, implémenté par un dispositif de contrôle à distance apte à cet objet.
